(19) Europäisches Patentamt
European Patent Office
Office européen des brevets

(11) **EP 2 861 897 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.12.2023 Patentblatt 2023/49**

(45) Hinweis auf die Patenterteilung:
**21.09.2016 Patentblatt 2016/38**

(21) Anmeldenummer: **14720469.7**

(22) Anmeldetag: **08.04.2014**

(51) Internationale Patentklassifikation (IPC):
**F16J 15/34** (2006.01)    **F16J 15/36** (2006.01)

(52) Gemeinsame Patentklassifikation (CPC):
**F16J 15/36; F16J 15/348**

(86) Internationale Anmeldenummer:
**PCT/EP2014/000936**

(87) Internationale Veröffentlichungsnummer:
**WO 2014/173495 (30.10.2014 Gazette 2014/44)**

(54) **GLEITRINGDICHTUNG**

SLIDE RING SEAL

JOINT D'ÉTANCHÉITÉ À BAGUE DE GLISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2013 DE 102013006840**
**11.07.2013 PCT/EP2013/002050**

(43) Veröffentlichungstag der Anmeldung:
**22.04.2015 Patentblatt 2015/17**

(73) Patentinhaber: **Carl Freudenberg KG**
**69469 Weinheim (DE)**

(72) Erfinder:
• **NEUBERGER, Soeren**
**68766 Hockenheim (DE)**
• **BOCK, Eberhard, Dr.**
**69509 Moerlenbach (DE)**
• **GUENTERT, Alexander**
**69115 Heidelberg (DE)**
• **LANG, Klaus, Dr.**
**82547 Eurasburg (DE)**

(74) Vertreter: **Hoefer & Partner Patentanwälte mbB**
**Pilgersheimer Straße 20**
**81543 München (DE)**

(56) Entgegenhaltungen:
EP-A1- 2 306 052    EP-B1- 1 164 302
DE-A1- 4 419 538    DE-A1-102011 114 349
DE-B4-102006 028 153    GB-A- 2 061 411
US-A1- 2004 245 729

• A.O. LEBECK: "Mechanical Loading - A Primary Source of Waviness in Mechanical Face Seals", Asle Transactions, vol. 20, no. 1, 1977, pages 195-208,
• VON A.O. LEBECK: "Face Seal Waviness Prediction, Measurement, Causes and Effects", 10th International Conference on Fluid Sealing, 1984, pages 295-312,
• Mechanical Face Seal Handbook, John C Dahlheimer, 1972, S 26
• ABD der Gleitringdichtung, Feodor Burgmann, 1988, S. 175
• Handbuch der Dichtungstechnik, Edgar Schmid, Expert Verlag, 1981, S 404
• Dichtungsringe fur dynamische Dichtungen, Schunk Kohlenstofftechnik GmbH, 2009
• Gleitringdichtungen fur Pumpen, Grundfos Management A/S, 2009, S. 68
• Mechanical Face Seal Handbook, John C Dahlheimer, 1972, S. 8
• Development of a non contacting seal for gas/liquid applications using wavy face technology", Lionle A Young, William E. (Bill) Key, Ronald L. (Ron) Grace, "13th International Pump Users Symposium", Houston, USA, Mar 5-7, 1996, S 39-45
• A test Apparatus for Measuring the Effects of Waviness in Mechanical Face Seals, A O.Lebeck. ASLE transactions. 1981 Vol. 24, S 371-378
• Investigation of Surface Waves on Hydrodynamic Lubrification, George Costa, B.S Mechanical Engineering, University of Massachusetts Datmouth, 1998, Juni 2000, S 1-9 und 26

**EP 2 861 897 B2**

## Beschreibung

Technisches Gebiet

Die Erfindung betrifft eine Gleitringdichtung gemäß dem Oberbegriff des Patentanspruchs 1.

Stand der Technik

Aus der DE 10 2011 114 349 A1 dass den nächstliegenden Stand der Technik darstellt, ist bereits eine Gleitringdichtung mit einem balgartigen Federmittel bekannt. Bei der zuvor beschriebenen Gleitringdichtung ist der Gegenring in einem Tragring aufgenommen, wobei der Tragring wiederum einer Welle zugeordnet ist. Der Tragring ist mit der Welle fest verbunden, um den Gegenring bei einer Rotation der Welle mitzunehmen.

Vor diesem Hintergrund besteht ein Bedarf nach Gleitringdichtungen, deren Gleitringe oder Gegenringe besonders flexibel sind, um problemlos Schwingungen auszugleichen.

Darstellung der Erfindung

Der Erfindung liegt daher die Aufgabe zugrunde, eine Gleitringdichtung der eingangs genannten Art derart auszugestalten und weiterzubilden, dass diese nach kostengünstiger und problemloser Fertigung einen besonders flexiblen Gleitring und/oder Gegenring aufweist.

Die vorliegende Erfindung löst die zuvor genannte Aufgabe durch die Merkmale des Patentanspruchs 1.

Erfindungsgemäß weist mindestens eine Dichtfläche Erhebungen oder Unebenheiten in der Größe 0,1 $\mu$m bis W auf, wobei sich W nach der Formel

$$W = 0{,}03 Dm/s$$

errechnet, wobei der mittlere Durchmesser Dm der Mittelwert aus Außendurchmesser und Innendurchmesser der kreisringförmigen Dichtfläche ist und wobei s die Dicke des Gleitrings oder Gegenrings darstellt. Erfindungsgemäß ist zunächst erkannt worden, dass bei einer Gleitringdichtung, deren Dichtflächen sehr flexibel sind, fertigungsbedingte Unebenheiten relativ problemlos ausgeglichen werden können. Konkret ist erkannt worden, dass fertigungsbedingte Unebenheiten am Gleitring und/oder am Gegenring durch das balgartige Federmittel kompensiert werden können. Allein durch die Federkraft des balgartigen Federmittels können die Unebenheiten ausgeglichen werden. Daher sind aufwendige Nachbesserungen und Nacharbeitungen an Dichtflächen von Gegenring und Gleitring nicht notwendig. Aus dem Stand der Technik ist es bekannt, Gleitringdichtungen derart zu fertigen, dass deren Dichtflächen Unebenheiten aufweisen, die allerhöchstens wenige $\mu$m betragen. Erfindungsgemäß können Fertigungsschritte eingespart werden, da durch flexible Dichtflächen größere Unebenheiten tolerabel sind. Eine Erhebung, Unebenheit oder Ebenheit im Sinne dieser Beschreibung wird gemäß DIN ISO 1101 gemessen.

Der zuvor genannte Faktor 0,03 kann auch einen höheren Wert annehmen, den der Fachmann anhand dieser Beschreibung geeignet auffinden kann.

Vor diesem Hintergrund könnte mindestens eine Dichtfläche Erhebungen oder Unebenheiten in der Größe zwischen 1 $\mu$m bis W, bevorzugt in der Größe zwischen 5 $\mu$m bis W, besonders bevorzugt in der Größe zwischen 20 $\mu$m bis W, höchst bevorzugt in der Größe zwischen 50 $\mu$m bis W aufweisen, wobei die Erhebungen oder Unebenheiten keine Oberflächenrauheiten oder Gasnuten umfassen. Die Erhebungen oder Unebenheiten sind letztlich Wellenberge und Wellentäler, welche beim Umlaufen auf einer Dichtfläche auftreten. Insoweit zählen Oberflächenrauheiten oder Gasnuten nicht zu den Strukturen, welche die Unebenheit bzw. Welligkeit des Gleitrings und/ oder Gegenrings beeinflussen.

Die Erhebungen oder Unebenheiten könnten als Wellentäler und Wellenberge ausgestaltet sein. Die Erhebungen oder Unebenheiten sind Wellenberge und Wellentäler, welche beim Umlaufen auf einer Dichtfläche auftreten. Vorteilhaft können daher auch wellige Gleitringe und Gegenringe verwendet werden.

Die Erhebungen oder Unebenheiten könnten auf einer Dichtfläche mindestens zwei Hoch- und zwei Tiefpunkte, bevorzugt drei Hoch- und drei Tiefpunkte, besonders bevorzugt vier Hoch- und vier Tiefpunkte aufweisen. Die Erhebungen oder Unebenheiten sind letztlich Wellenberge und Wellentäler, welche beim Umlaufen auf einer Dichtfläche auftreten. Je nach Welligkeit können unterschiedlich viele Wellenberge und Wellentäler auftreten. Diese Welligkeit kann im Wesentlichen eingeebnet werden.

Die Erhebungen oder Unebenheiten auf mindestens einer Dichtfläche sind durch das balgartige Federmittel zumindest teilweise derart deformierbar, dass im Betrieb der Gleitringdichtung keine Funktionsbeeinträchtigung entsteht. Das balgartige Federmittel kann eine Kraft auf eine Dichtfläche anwenden, welche deren Welligkeit im Wesentlichen einebnet. Auch eine vollständige Einebnung ist möglich.

Das balgartige Federmittel könnte mit einem ringförmigen Anschlagbereich am Gleitring anliegen und mit einem ringförmigen Anbindebereich an einem Gehäuse festgelegt sein, wobei der Anschlagbereich und der Anbindebereich durch mindestens einen elastisch deformierbaren Scharnierbereich aneinander angebunden sind. Durch diese konkrete Ausgestaltung wird dem Federmittel eine geometrische Form verliehen, welche erlaubt, dieses sowohl in radialer, torsionaler und axialer Richtung leicht auszulenken und zu deformieren. Dennoch kann durch den Scharnierbereich und eine geeignete Wahl der Steifigkeit des Elastomers eine ausreichende Anpresskraft auf den Gleitring ausgeübt werden.

Vor diesem Hintergrund könnte der Scharnierbereich im Querschnitt S-förmig ausgebildet sein. Ein solcher Scharnierbereich ist besonders leicht und problemlos in radialer, torsionaler und axialer Richtung auslenkbar. Das balgartige Federmittel ist bevorzugt aus einem Polymer, insbesondere einem Elastomer, gefertigt. Besonders bevorzugt ist das Elastomer ein Naturkautschuk oder weist einen solchen auf.

Der Gegenring könnte von einem Tragkörper aufgenommen sein, welcher einen axialen Fortsatz zum Aufpressen auf eine Welle aufweist. Hierdurch ist ein Presssitz zwischen Tragkörper und Welle realisierbar.

Ein Bereich des Fortsatzes könnte im Querschnitt derart kegelstumpfförmig ausgestaltet sein, dass der Innenraum des Fortsatzes zur Aufnahme einer Welle konisch verläuft. Der Innenraum des Fortsatzes ist im Wesentlichen ein Hohlzylinder, an den sich ein kegelstumpfförmiger Abschnitt anschließt. Durch den konischen Verlauf des Innenraums ist das Einführen des Tragkörpers auf die Welle erleichtert. Die konische Ausgestaltung erlaubt es, Wellen aufzunehmen, deren Durchmesser geringfügige Schwankungen aufweisen.

Durch die Ausbildung eines konischen Verlaufs ist sichergestellt, dass ein Bereich nicht auf der Welle aufliegt. Hierdurch werden durch einen Presssitz induzierte Verformungen an den Tragkörper nicht in dem Maße weitergegeben, dass die Ausrichtung des Gegenrings in negativer Weise beeinflusst wird. Bei einer Montage entstehen somit geringere Lagefehler eines Gegenrings, so dass die Gleitringdichtung sehr robust wird. Da der konische Verlauf für eine Entkopplung sorgt, sind hohe Überdeckungen und plastische Verformungen in einem Blech zulässig. Der Tragkörper kann derart auf der Welle aufsitzen, dass ein Dichtsitz ohne zusätzliche Dichthilfen gegeben ist. Der Dichtsitz kann metallisch dicht sein. Eine plastische Verformung erlaubt es, Leckagekanäle sicher abzuschließen.

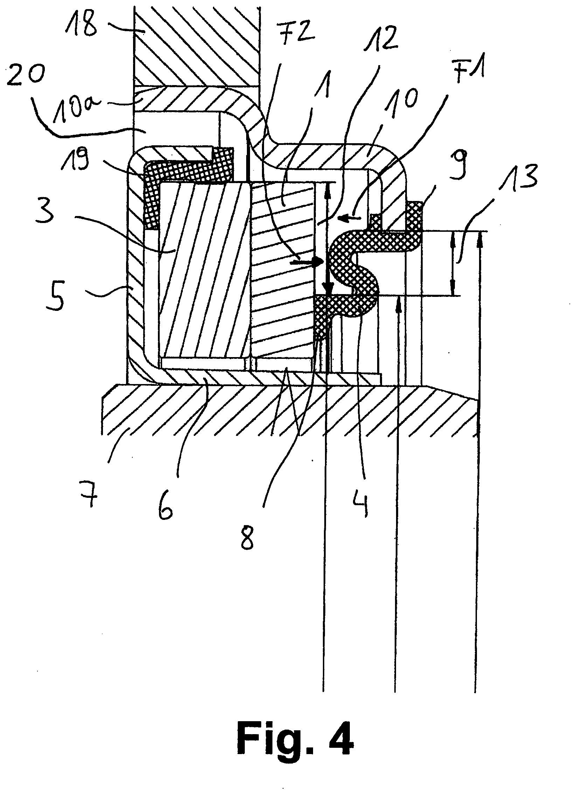

Der Quotient aus einer ersten Kreisringfläche am Gleitring, welche dem Federmittel zugewandt ist, und einer projizierten zweiten Kreisringfläche, welche sich zwischen einem Anschlagbereich des Federmittels am Gleitring und einem Anbindebereich des Federmittels an einem Gehäuse erstreckt, könnte derart gewählt sein, dass durch Druckänderung (in einem Raum 20, siehe Fig. 4) eine axial in Richtung des Gleitrings auf die projizierte zweite Kreisringfläche wirkende zweite Kraft zwischen 1 % und 100 000 %, bevorzugt zwischen 10 % und 1000 %, besonders bevorzugt zwischen 10 % und 100 %, einer ersten Kraft beträgt, welche durch Druckänderung (in einem Raum 20, siehe Fig. 4) auf die erste Kreisringfläche axial in Richtung des Gegenrings wirkt. Hierdurch können höhere Druckdifferenzen und vor allem wechselnde Druckverhältnisse eine sichere Abdichtung nahezu nicht beeinträchtigen.

Zusätzlich kann mit dieser Anordnung bei einer Auslegung in sehr kleinem Bauraum Druckstabilität erreicht werden. Auch bei nicht wechselnder Druckbelastung kann ein geringer Bauraum genutzt werden.

Die in den angegebenen Intervallen genannten Prozentwerte sind anwendungsspezifisch je nach abzudichtender Druckdifferenz geeignet auszuwählen. Eine Gleitringdichtung mit einem k-Faktor von ungefähr 0 kann somit einfach realisiert werden. Üblicherweise müssen Gleitringdichtungen k-Faktoren im Bereich von 0,6 bis 0,8 aufweisen, um gegen Druck sicher abzudichten.

Der k-Faktor ist der sogenannte hydraulische Belastungsfaktor. Die bekannten Gleitringdichtungen sind jedoch nur begrenzt bei wechselnden Druckverhältnissen einsetzbar. Eine Gleitringdichtung, welche einen sehr geringen k-Faktor aufweist, kann auch wechselnden Druckverhältnissen Stand halten und gegen diese sicher abdichten. Es sind als Obergrenze auch noch weit höhere prozentuale Werte denkbar, die der Fachmann anhand dieser Beschreibung geeignet auffinden kann.

Das Federmittel könnte eine am Gleitring anliegende Radiallippe aufweisen, welche einen gleich großen oder größeren Innendurchmesser aufweist als der Tragkörper. Bevorzugt ist die Radiallippe materialeinheitlich und einstückig mit dem Federmittel ausgebildet. Hierdurch kann Schmutz davon abgehalten werden, in den Bereich der Dichtflächen zu gelangen.

Vor diesem Hintergrund könnte das Federmittel eine am Gleitring anliegende Radiallippe aufweisen, welche den gleichen Innendurchmesser aufweist wie der Tragkörper. Durch diese konkrete Ausgestaltung ist sichergestellt, dass die Radiallippe streifend an der Außenumfangsfläche einer Welle anliegt und bewirkt, dass nahezu keine Partikel in den Bereich der Dichtflächen gelangen können.

Das Federmittel könnte eine Radiallippe aufweisen, welche unter Winkelbildung vom Gleitring abragt und einen gleich großen oder größeren Innendurchmesser aufweist als der Tragkörper. Aufgrund der Winkelbildung ist die Radiallippe leicht deformierbar und kann problemlos gegen die Außenumfangsfläche einer Welle gedrückt werden.

Vor diesem Hintergrund könnte das Federmittel eine Radiallippe aufweisen, welche unter Winkelbildung vom Gleitring abragt und den gleichen Innendurchmesser aufweist wie der Tragkörper. Eine solche Radiallippe liegt streifend an einer Außenumfangsfläche einer Welle an, so dass nahezu keine Partikel diese Radiallippe passieren können.

Das Federmittel könnte eine an seinem Anschlagbereich anliegende Staublippe aufweisen, welche einen gleich großen oder größeren Innendurchmesser aufweist als der Tragkörper. Die Staublippe ist nicht materialeinheitlich mit dem Federmittel ausgebildet. Die Staublippe kann beispielsweise aus einem Vliesstoff gefertigt sein. Konkret ist denkbar, eine Scheibe aus einem Vlies vorzusehen. Durch eine Staublippe kann verhindert werden, dass Staub in den Bereich der Dichtflächen gelangt.

Vor diesem Hintergrund könnte das Federmittel eine an seinem Anschlagbereich anliegende Staublippe aufweisen, welche den gleichen Innendurchmesser aufweist wie der Tragkörper. Durch diese konkrete Ausgestaltung ist sichergestellt, dass die Staublippe streifend an der Außenumfangsfläche einer Welle anliegt. Durch diese konkrete Ausgestaltung kann nahezu kein Staub die Staublippe passieren.

Das Federmittel könnte eine an seinem Anbindebereich anliegende Staublippe aufweisen, welche einen gleich großen oder größeren Innendurchmesser aufweist als der Tragkörper. Durch die Anbindung der Staublippe an den Anbindebereich ist die Staublippe leicht flexibel deformierbar, ohne dabei an das Federmittel anzuschlagen und dieses zu stören.

Vor diesem Hintergrund könnte das Federmittel eine an seinem Anbindebereich anliegende Staublippe aufweisen, welche den gleichen Innendurchmesser aufweist wie der Tragkörper. Durch diese konkrete Ausgestaltung ist eine leicht deformierbare und flexible Staublippe realisierbar, welche im Normalzustand streifend an der Außenumfangsfläche einer Welle anliegt.

Das Federmittel könnte von einer Wandung zumindest teilweise in axialer und/oder radialer Richtung umgeben sein. Hierdurch ist eine Labyrinthdichtung realisiert.

Vor diesem Hintergrund könnte die Wandung ein Teil eines Tragkörpers sein, in welchem der Gegenring aufgenommen ist. Durch diese konkrete Ausgestaltung ist keine separate Wandung vorzusehen, sondern kann der Tragkörper auf die Welle aufgepresst werden und zugleich eine Labyrinthdichtung ausbilden.

Zwischen dem Fortsatz und dem Gegenring könnte ein Spalt ausgebildet sein. In dem Spalt können sich Verwirbelungen bilden, wodurch Schmutzpartikel im Spalt zurückgehalten werden, jedoch partikelfreie Luft zwischen die Dichtflächen gelangen kann.

Des Weiteren ist denkbar, dass der Spalt als Fangrinne für Öl dient. Öl, welches sich im Spalt bzw. der Fangrinne gefangen hat, kann durch die Rotation des Gegenrings rückgefördert werden.

Der Fortsatz könnte sich in axialer Richtung derart weit erstrecken, dass auch der Gleitring vom Fortsatz unterlaufen ist. Durch diese konkrete Ausgestaltung kann Luft vorteilhaft zwischen die Dichtflächen geführt werden.

Die hier beschriebene Gleitringdichtung könnte gasgeschmiert sein. Überraschend hat sich herausgestellt, dass die Gleitringdichtung trotz der hier beschriebenen Erhebungen oder Unebenheiten unter Verwendung eines Gases funktioniert. Der Fachmann hätte erwartet, dass die Gleitringdichtung lediglich bei Verwendung einer Flüssigkeit gut arbeitet.

Die Dichtfläche des Gleitrings und/ oder die Dichtfläche des Gegenrings könnte hydrodynamische Strukturen, insbesondere sichelförmige Strukturen, aufweisen. Hierdurch wird der Druckaufbau zwischen den Dichtflächen verbessert. Strukturen dieser Art sind in der EP 1 054 196 A2 offenbart. Vor diesem Hintergrund ist auch denkbar, hydroynamische Strukturen vorzusehen, welche in beiden Drehrichtungen wirksam sind.

Die hier beschriebene Gleitringdichtung könnte als Abdichtung der Kurbelwelle von Verbrennungsmotoren verwendet werden. Sie eignet sich hierfür besonders, da sie eine geringe Reibung zeigt.

Die hier beschriebene Gleitringdichtung kann für Getriebeabdichtungen bei hohen Gleitgeschwindigkeiten und moderaten Drücken verwendet werden. Insbesondere ist denkbar, die Gleitringdichtung in der Automobilindustrie einzusetzen. Dabei ist konkret denkbar, die Gleitringdichtung als Turboladerabdichtung, Kurbelwellenabdichtung, Getriebeabdichtung oder Abdichtung von Elektromotoren zu verwenden.

Es ist möglich, die hier beschriebene Gleitringdichtung als gasgeschmierte Gleitringdichtung auszugestalten. Des Weiteren ist es möglich, die Dichtflächen mit hydrodynamisch wirksamen Strukturen zu versehen.

Kurzbeschreibung der Zeichnung

In der Zeichnung zeigen

Fig. 1 eine Schnittansicht des oberen Teils einer Gleitringdichtung, wobei der Gegenring und der Gleitring derart flexibel sind, dass diese Unebenheiten von 0,1 bis 500 $\mu$m ausgleichen können,

Fig. 2 eine Gleitringdichtung, welche einen Tragkörper aufweist, der unter einem Presssitz auf einer Welle aufsitzt,

Fig. 3 eine teilweise Schnittansicht eines Tragkörpers, bei welchem etwa zwei Drittel seines Fortsatzes auf der Außenumfangsfläche einer Welle aufliegen und etwa ein Drittel des Fortsatzes sich unter Ausbildung eines konisch verlaufenden Ringspaltes von der Außenumfangsfläche abhebt,

Fig. 4 eine Gleitringdichtung, bei welcher Kreisringflächen dargestellt sind, an welchen Druckkräfte angreifen können,

Fig. 5 eine Gleitringdichtung, bei welcher eine Radiallippe parallel zu den Dichtflächen verläuft,

Fig. 6 eine weitere Gleitringdichtung, bei welcher eine etwas längere Radiallippe parallel zu den Dichtflächen verläuft,

Fig. 7 eine Gleitringdichtung, bei welcher eine Radiallippe derart gewinkelt ist, dass diese einen von 90° verschiedenen Winkel mit der Rotationsachse der Welle einschließt,

Fig. 8 eine Gleitringdichtung mit einer ebenfalls geneigten Radiallippe, welche streifend an einer Außenumfangsfläche einer Welle anliegt,

Fig. 9    eine Gleitringdichtung, bei welcher am Federmittel eine Vliesscheibe angeordnet ist,

Fig. 10    eine weitere Gleitringdichtung, bei welcher am Federmittel eine Vliesscheibe festgelegt ist, welche in streifendem Kontakt zur Außenumfangsfläche einer Welle steht,

Fig. 11    eine Gleitringdichtung, bei welcher eine Vliesscheibe vom Gleitring weit beabstandet ist,

Fig. 12    eine weitere Gleitringdichtung, bei welcher eine Vliesscheibe relativ weit vom Gleitring beabstandet ist, jedoch an der Außenumfangsfläche der Welle anliegt,

Fig. 13    eine Gleitringdichtung, bei welcher eine Labyrinthdichtung vorgesehen ist,

Fig. 14    eine weitere Gleitringdichtung, bei welcher eine Labyrinthdichtung vorgesehen ist, wobei eine Wandung der Labyrinthdichtung materialeinheitlich und einstückig mit dem Tragkörper ausgebildet ist,

Fig. 15    eine weitere Gleitringdichtung, bei welcher zwischen dem Gegenring und dem Tragkörper ein Spalt vorgesehen ist,

Fig. 16    den unteren Teil der Gleitringdichtung gemäß Fig. 15, wobei der Spalt als Fangrinne für ein Öl fungiert,

Fig. 17    eine Gleitringdichtung, bei welcher der Fortsatz des Tragkörpers sowohl den Gegenring als auch den Gleitring unterläuft,

Fig. 18    eine Gleitringdichtung, bei welcher der Fortsatz des Tragkörpers metallisch dichtend auf der Außenumfangsfläche einer Welle aufliegt, und

Fig. 19    in der oberen Ansicht eine Draufsicht auf eine Dichtfläche und in der unteren Ansicht die Darstellung des Verlaufs einer normierten Unebenheit ringsum der Dichtfläche.

Ausführung der Erfindung

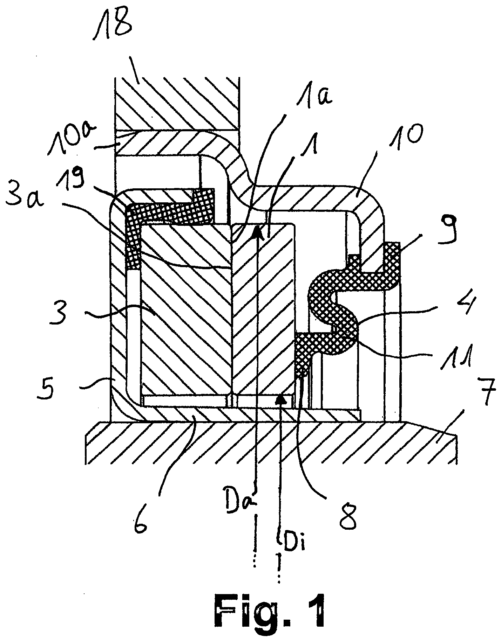

Fig. 1 zeigt eine Gleitringdichtung, umfassend einen Gleitring 1, der axial beweglich gelagert ist, und einen Gegenring 3, wobei der Gleitring 1 und der Gegenring 3 jeweils aneinander liegende Dichtflächen 1 a, 3a aufweisen, wobei die Dichtfläche 1a des Gleitrings 1 der Dichtfläche 3a des Gegenrings 3 gegenüberliegt und wobei der Gleitring 1 durch ein balgartiges Federmittel 4 gegen den Gegenring 3 gedrückt ist.
Mindestens eine Dichtfläche 1a, 3a weist Erhebungen oder Unebenheiten in der Größe 0,1 μm bis W in mm auf, wobei sich W nach der Formel

$$W = 0,03 Dm / s ,$$

errechnet, wobei der mittlere Durchmesser Dm der Mittelwert aus Außendurchmesser Da und Innendurchmesser Di der kreisringförmigen Dichtfläche 1 a, 3a ist und wobei s die Dicke des Gleitrings 1 oder Gegenrings 3 darstellt.
Die Werte für Dm und s sind in der gleichen Einheit bspw. in m einzusetzen.
Mindestens eine Dichtfläche 1a, 3a weist Erhebungen oder Unebenheiten in der Größe 0,1 μm bis 500 μm auf. Der Gegenring 3 ist von einem Tragkörper 5 aufgenommen, welche einen axialen Fortsatz 6 zum Aufpressen auf eine Welle 7 aufweist.
Die Erhebungen oder Unebenheiten sind als Wellentäler und Wellenberge ausgestaltet.
Die Erhebungen oder Unebenheiten auf mindestens einer Dichtfläche 1 a, 3a sind durch das balgartige Federmittel 4 zumindest teilweise derart deformierbar, dass im Betrieb der Gleitringdichtung keine Funktionsbeeinträchtigung entsteht.
Das balgartige Federmittel 4 liegt mit einem ringförmigen Anschlagbereich 8 am Gleitring 1 an und ist mit einem ringförmigen Anbindebereich 9 an einem Gehäuse 10 festgelegt, wobei der Anschlagbereich 8 und der Anbindebereich 9 durch mindestens einen elastisch deformierbaren Scharnierbereich 11 aneinander angebunden sind. Der Scharnierbereich 11 ist im Querschnitt S-förmig ausgestaltet.

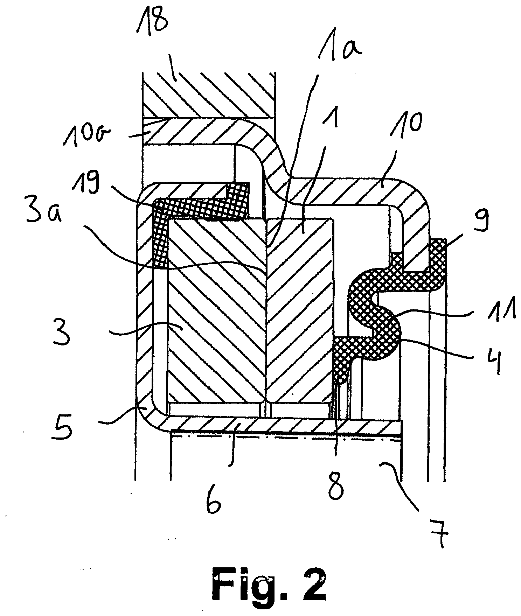

Fig. 2 zeigt, dass der Tragkörper 5 mit seinem axialen Fortsatz 6 auf die Welle 7 aufgepresst werden kann.

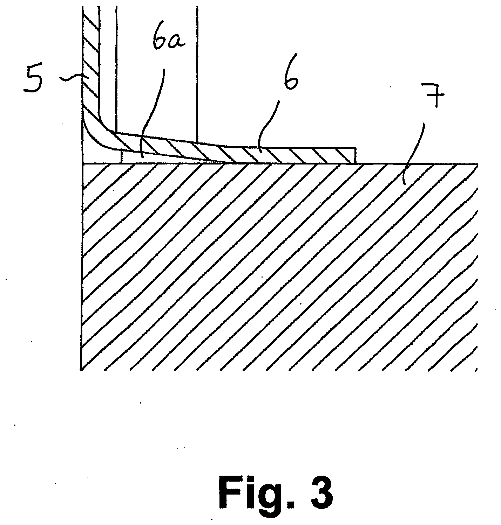

Fig. 3 zeigt, dass ein Bereich 6a des Fortsatzes 6 im Querschnitt derart kegelstumpfförmig ausgestaltet ist, dass der Innenraum des Fortsatzes 6 zur Aufnahme einer Welle 7 konisch verläuft. Hierdurch wird der Gegenring 3 von Kräften entkoppelt, die durch einen Presssitz des Fortsatzes 6 in den Tragkörper 5 eingetragen werden.
Fig. 4 zeigt eine Gleitringdichtung, bei welcher am Gleitring 1 eine erste Kreisringfläche 12 ausgebildet ist, an welcher eine erste Kraft F1 in Axialrichtung angreifen kann, wobei die erste Kraft F1 in Richtung des Gegenrings 3 gerichtet ist.
Des Weiteren ist eine projizierte, zweite Kreisringfläche 13 vorgesehen. Die projizierte, zweite Kreisringfläche 13 erstreckt sich in Radialrichtung zwischen einem Anschlagbereich 8 des Federmittels 4 am Gleitring 1 und einem Anbindebereich 9 des Federmittels 4 an einem Gehäuse 10.
Eine durch Druckbeaufschlagung axial in Richtung des Gleitrings 1 auf die projizierte zweite Kreisringfläche 13 wirkende zweite Kraft F2 beträgt zwischen 1 % und 100 000 % einer ersten Kraft F1, welche auf die erste Kreisringfläche 12 axial in Richtung des Gegenrings 3 wirkt.

Vorteilhaft ist die erste Kraft F1 größer als die zweite Kraft F2. Eine am Gleitring 1 angreifende Druckraft kann über das Federmittel 4 ausgeglichen werden.

Daher ist der Quotient aus der ersten Kreisringfläche 12 am Gleitring 1, welche dem Federmittel 4 zugewandt ist, und der projizierten, zweiten Kreisringfläche 13, welche sich zwischen dem Anschlagbereich 8 des Federmittels 4 am Gleitring 1 und dem Anbindebereich 9 des Federmittels 4 an dem Gehäuse 10 erstreckt, derart gewählt, dass durch Druckänderung in einem Raum 20 die axial in Richtung des Gleitrings 1 auf die projizierte, zweite Kreisringfläche 13 wirkende zweite Kraft F2 zwischen 1 % und 100 000 % der ersten Kraft F1 beträgt, welche durch Druckänderung in einem Raum 20 auf die erste Kreisringfläche 12 axial in Richtung des Gegenrings 3 wirkt.

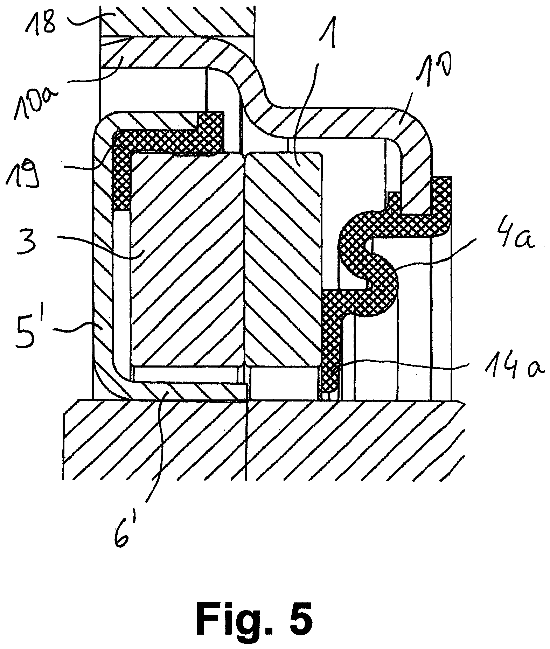

Fig. 5 zeigt eine Gleitringdichtung, bei welcher das Federmittel 4a eine am Gleitring 1 anliegende Radiallippe 14a aufweist, welche einen größeren Innendurchmesser aufweist als der Tragkörper 5'.

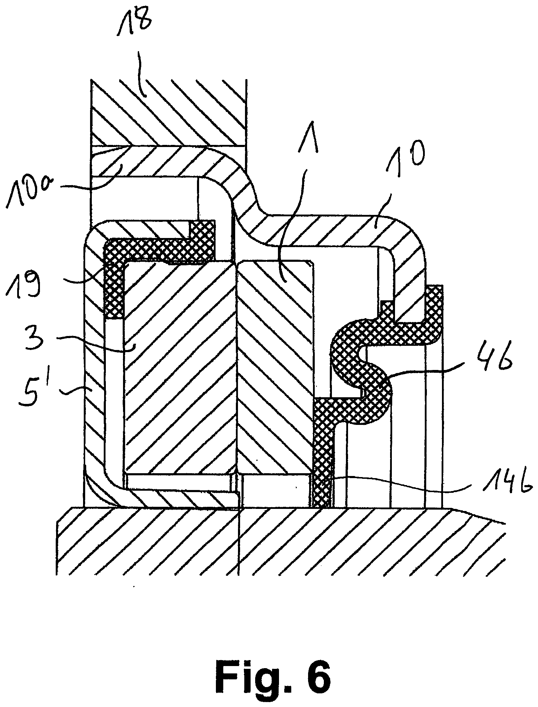

Fig. 6 zeigt, dass das Federmittel 4b eine am Gleitring 1 anliegende Radiallippe 14b aufweist, welche den gleichen Innendurchmesser aufweist wie der Tragkörper 5'.

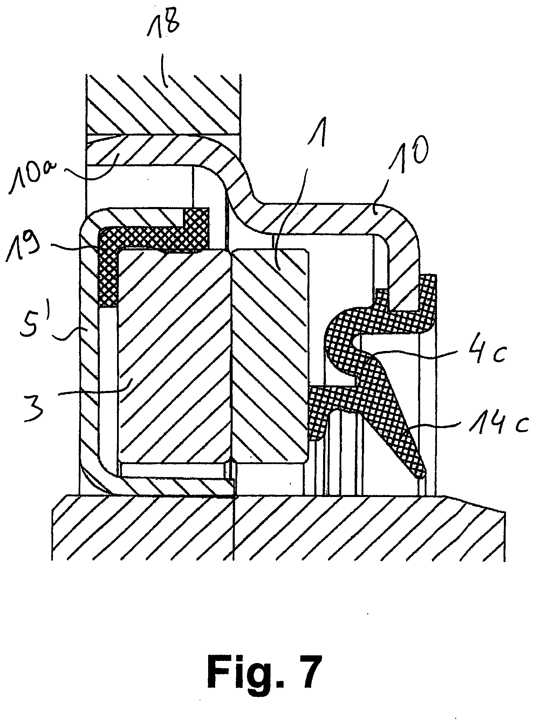

Fig. 7 zeigt, dass das Federmittel 4c eine Radiallippe 14c aufweist, welche unter Winkelbildung vom Gleitring 1 abragt und einen größeren Innendurchmesser aufweist als der Tragkörper 5'.

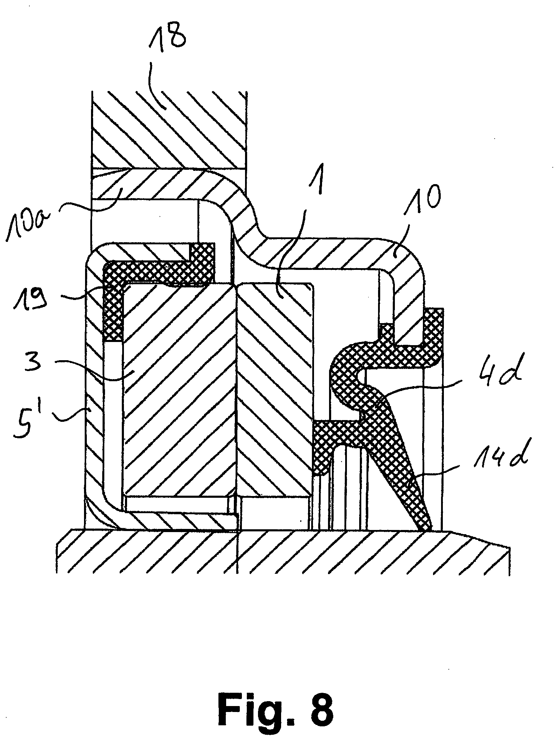

Fig. 8 zeigt, dass das Federmittel 4d eine Radiallippe 14d aufweist, welche unter Winkelbildung vom Gleitring 1 abragt und den gleichen Innendurchmesser aufweist wie der Tragkörper 5'.

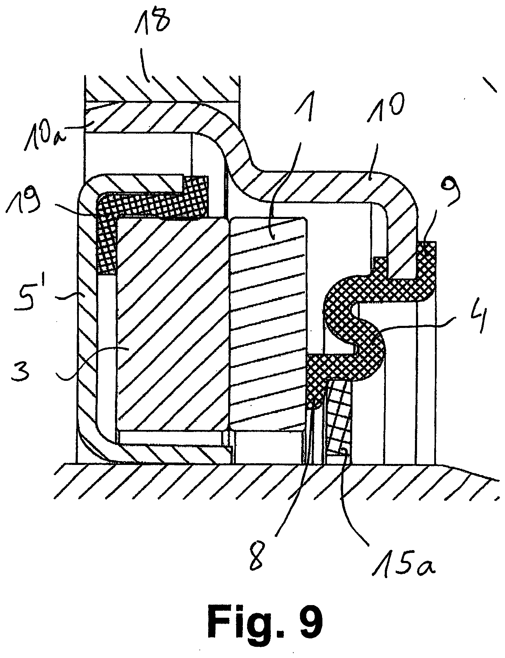

Fig. 9 zeigt, dass das Federmittel 4 eine an seinem Anschlagbereich 8 anliegende Staublippe 15a aufweist, welche einen größeren Innendurchmesser aufweist als der Tragkörper 5'.

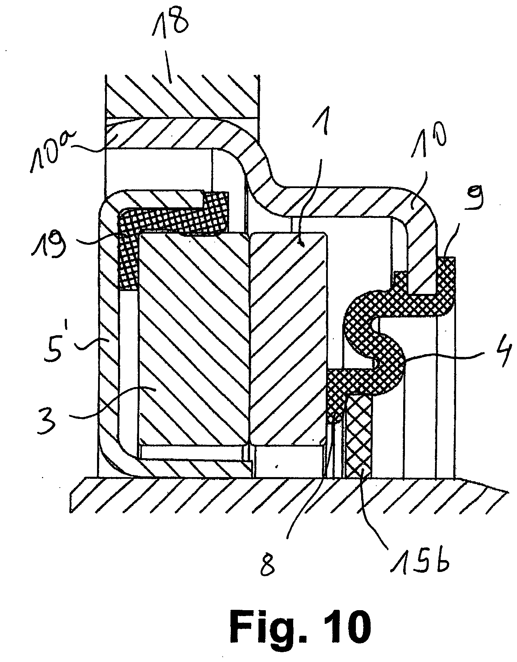

Fig. 10 zeigt, dass das Federmittel 4 eine an seinem Anschlagbereich 8 anliegende Staublippe 15b aufweist, welche den gleichen Innendurchmesser aufweist wie der Tragkörper 5'.

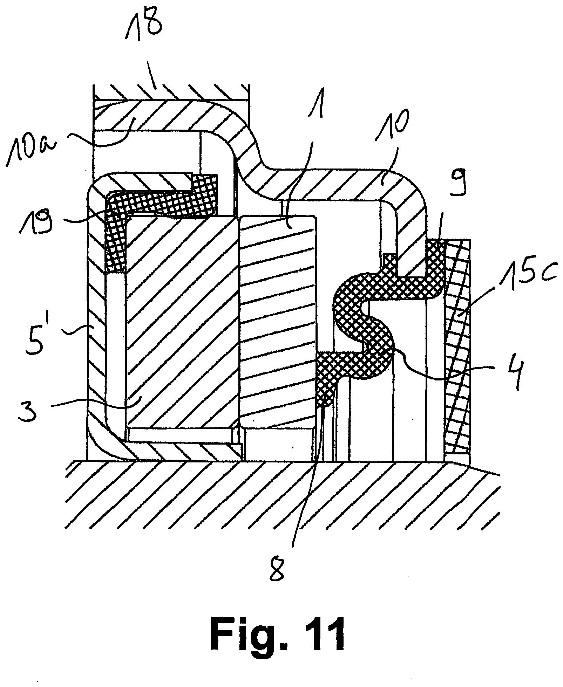

Fig. 11 zeigt, dass das Federmittel 4 eine an seinem Anbindebereich 9 anliegende Staublippe 15c aufweist, welche einen größeren Innendurchmesser aufweist als der Tragkörper 5'.

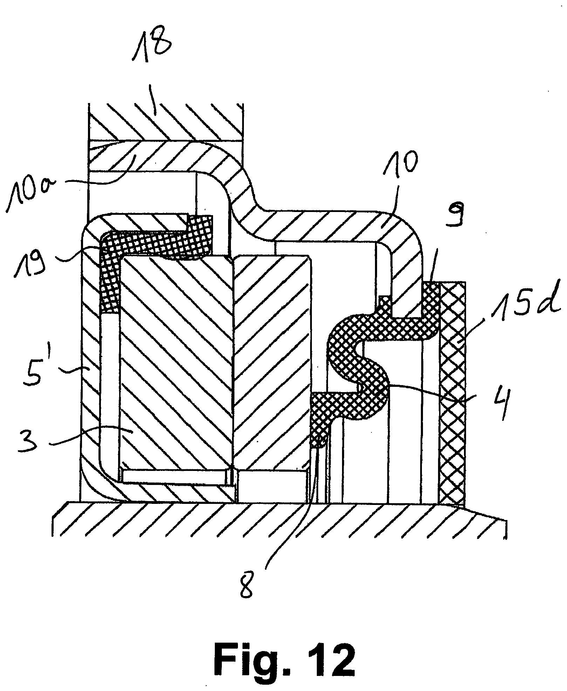

Fig. 12 zeigt, dass das Federmittel 4 eine an seinem Anbindebereich 9 anliegende Staublippe 15d aufweist, welche den gleichen Innendurchmesser aufweist wie der Tragkörper 5'.

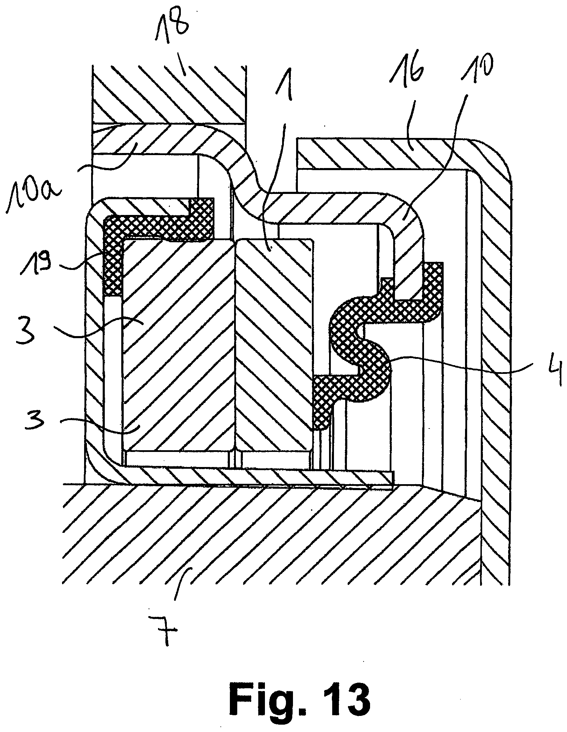

Fig. 13 zeigt, dass das Federmittel 4 von einer Wandung 16 zumindest teilweise in axialer und/oder radialer Richtung umgeben ist. Hierdurch ergibt sich eine Kammerung des Federmittels 4. Es wird eine Labyrinthdichtung geschaffen.

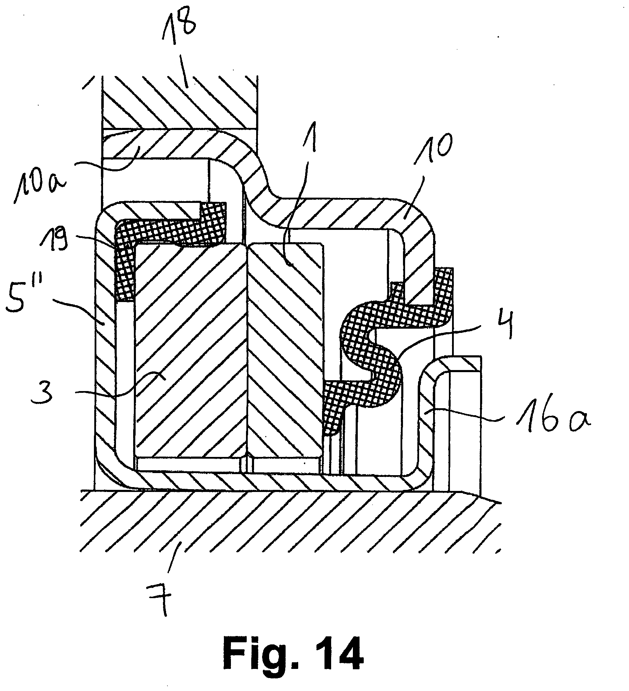

Fig. 14 zeigt, dass die Wandung 16a ein Teil eines Tragkörpers 5" ist, in welchem der Gegenring 3 aufgenommen ist.

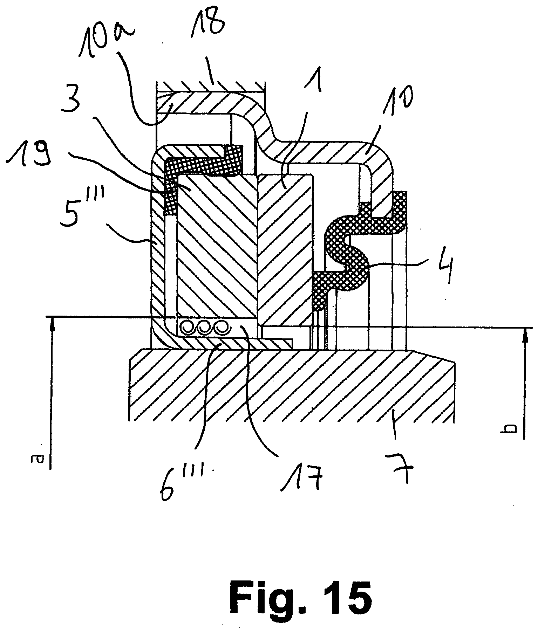

Fig. 15 zeigt, dass zwischen dem Fortsatz 6''' und dem Gegenring 3 ein Spalt 17 aufgenommen ist.

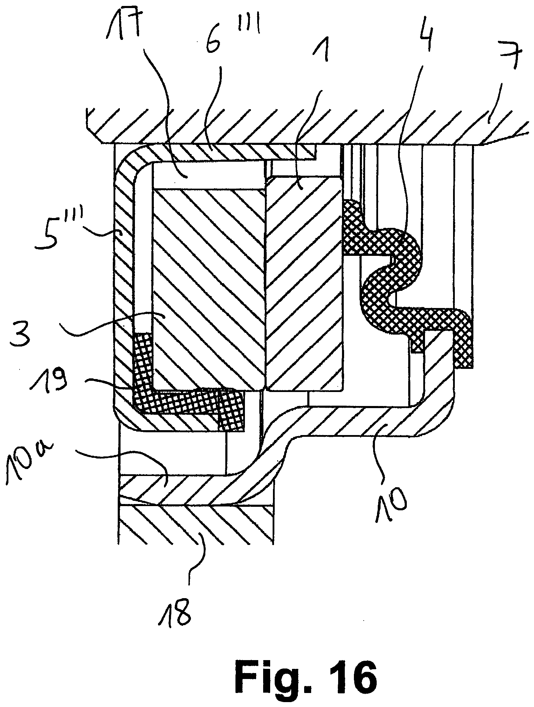

Fig. 16 zeigt den unteren Teil der Gleitringdichtung gemäß Fig. 15. Der Spalt 17 fungiert hier als Fangrinne für Öl, welches rückgefördert werden kann.

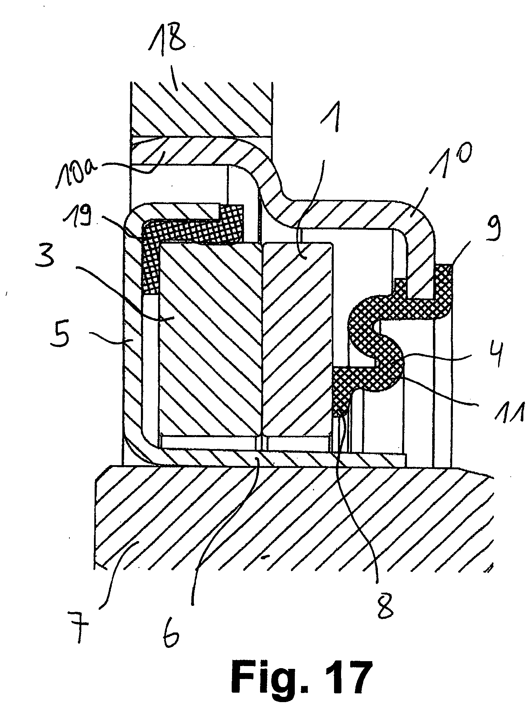

Fig. 17 zeigt, dass sich der Fortsatz 6 in axialer Richtung derart weit erstreckt, dass auch der Gleitring 1 vom Fortsatz 6 unterlaufen ist.

Der Gegenring 3 ist derart ausgebildet und/oder angeordnet, dass Rotationskräfte geringe Konizität oder Verformung induzieren. Dies gilt für alle in den Fig. 1 bis 18 beschriebenen Gleitringdichtungen.

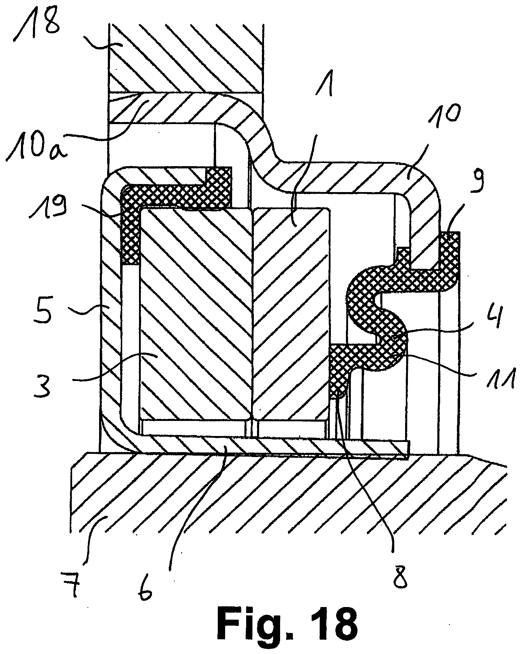

Fig. 18 zeigt eine Gleitringdichtung, bei welcher ein Bereich 10a des Gehäuses an einer Gegenwandung 18 metallisch dichtend, vollgummiert, teilgummiert oder unter Zwischenlage einer Dichtmasse, insbesondere eines Dichtlacks, angelegt ist.

In den Gleitringdichtungen gemäß Fig. 1 bis Fig. 18 könnte der Gegenring 3 derart symmetrisch ausgeführt sein, so dass Fliehkräfte keinen Einfluss auf dessen Verformung haben.

Der Fortsatz 6 könnte gegenüber der Welle 7 statisch abgedichtet sein. Die statische Dichtung kann vollgummiert, teilgummiert, mit Dichtlack oder metallisch dichtend ausgestaltet sein.

In den Gleitringdichtungen gemäß Fig. 1 bis Fig. 18 ist dem Gegenring 3 eine Signalspur 19 zugeordnet. Hierdurch kann die Gleitringdichtung zugleich als Encoder fungieren. Die Signalspur 19 kann aus einem Elastomer bestehen, in welchem magnetisierbare oder magnetisierte Partikel aufgenommen sind.

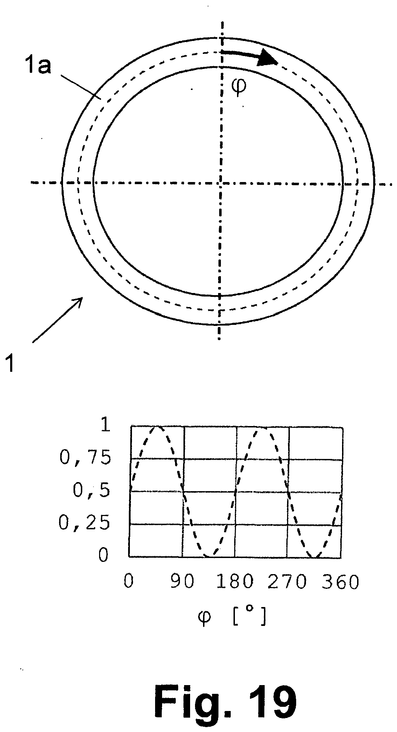

Fig. 19 zeigt die Welligkeit des Gleitrings 1 beim Umlaufen auf dessen Dichtfläche 1a. Der Winkel $\varphi$ nimmt Werte zwischen 0 und 360 Grad an.

In Fig. 19 ist dargestellt, dass zwei Hochpunkte und zwei Tiefpunkte durchlaufen werden, wenn man einmal auf einer Dichtfläche 1 a umläuft. Die Erhebungen oder Unebenheiten auf einer Dichtfläche 1a weisen daher im konkreten Fall zwei Hoch- und zwei Tiefpunkte, nämlich zwei Wellenberge und zwei Wellentäler, auf.

Die Erhebungen oder Unebenheiten auf einer Dichtfläche 1a, 3a, nämlich Wellentäler und Wellenberge, sind durch das balgartige Federmittel 4 zumindest teilweise derart deformierbar, dass im Betrieb der Gleitringdichtung keine Funktionsbeeinträchtigung entsteht.

**Patentansprüche**

1. Gleitringdichtung, umfassend einen Gleitring (1), der axial beweglich gelagert ist, und einen Gegenring (3), wobei der Gleitring (1) und der Gegenring (3) jeweils aneinander liegende Dichtflächen (1a, 3a) aufweisen, wobei die Dichtfläche (1 a) des Gleitrings (1) der Dichtfläche (3a) des Gegenrings (3) gegenüberliegt und wobei der Gleitring (1) durch ein balgartiges Federmittel (4) gegen den Gegenring (3) gedrückt ist, wobei der Gegenring (3) von einem Tragkörper (5) aufgenommen ist, welcher einen axialen Fortsatz (6) zum Aufpressen auf eine Welle (7) aufweist, **dadurch gekennzeichnet, dass** mindestens eine Dichtfläche (1a, 3a) Erhebungen oder Unebenheiten in der Größe 0,1 $\mu$m bis W mm aufweist, wobei sich W nach der Formel

$$W = 0{,}03Dm\ /s$$

errechnet, wobei der mittlere Durchmesser Dm der Mittelwert aus Außendurchmesser (Da) und Innendurchmesser (Di) der kreisringförmigen Dichtfläche (1a, 3a) ist und wobei s die Dicke des Gleitrings (1) oder Gegenrings (3) darstellt und dass ein Bereich (6a) des Fortsatzes (6) im Querschnitt derart kegelstumpfförmig ausgestaltet ist, dass der Innenraum des Fortsatzes (6) zur Aufnahme einer Welle (7) konisch verläuft.

2. Gleitringdichtung nach Anspruch 1, **dadurch gekennzeichnet, dass** mindestens eine Dichtfläche (1a, 3a) Erhebungen oder Unebenheiten in der Größe zwischen 1 $\mu$m bis W, bevorzugt in der Größe zwischen 5 $\mu$m bis W, besonders bevorzugt in der Größe zwischen 20 $\mu$m bis W, höchst bevorzugt in der Größe zwischen 50 $\mu$m bis W aufweist.

3. Gleitringdichtung nach Anspruch 1 oder 2, **dadurch gekennzeichnet, dass** die Erhebungen oder Unebenheiten als Wellentäler und Wellenberge ausgestaltet sind.

4. Gleitringdichtung nach einem der voranstehenden Ansprüche, **dadurch gekennzeichnet, dass** die Erhebungen oder Unebenheiten auf einer Dichtfläche (1a, 3a) mindestens zwei Hoch- und zwei Tiefpunkte, bevorzugt drei Hoch- und drei Tiefpunkte, besonders bevorzugt vier Hoch- und vier Tiefpunkte aufweisen.

5. Gleitringdichtung nach einem der voranstehenden Ansprüche, **dadurch gekennzeichnet, dass** die Erhebungen oder Unebenheiten auf mindestens einer Dichtfläche (1a, 3a) durch das balgartige Federmittel (4) zumindest teilweise derart deformierbar sind, dass im Betrieb der Gleitringdichtung keine Funktionsbeeinträchtigung entsteht.

6. Gleitringdichtung nach einem der voranstehenden Ansprüche, **dadurch gekennzeichnet, dass** das balgartige Federmittel (4) mit einem ringförmigen Anschlagbereich (8) am Gleitring (1) anliegt und mit einem ringförmigen Anbindebereich (9) an einem Gehäuse (9) festgelegt ist, wobei der Anschlagbereich (8) und der Anbindebereich (9) durch mindestens einen elastisch deformierbaren Scharnierbereich (11) aneinander angebunden sind.

7. Gleitringdichtung nach einem der voranstehenden Ansprüche, **dadurch gekennzeichnet, dass** der Quotient aus einer ersten Kreisringfläche (12) am Gleitring (1), welche dem Federmittel (4) zugewandt ist, und einer projizierten, zweiten Kreisringfläche (13), welche sich zwischen einem Anschlagbereich (8) des Federmittels (4) am Gleitring (1) und einem Anbindebereich (9) des Federmittels (4) an einem Gehäuse (10) erstreckt, derart gewählt ist, dass eine axial in Richtung des Gleitrings (1) auf die projizierte, zweite Kreisringfläche (13) wirkende zweite Kraft zwischen 1 % und 100 000 %, bevorzugt zwischen 10 % und 1000 %, besonders bevorzugt zwischen 10 % und 100 %, einer ersten Kraft beträgt, welche auf die erste Kreisringfläche (12) axial in Richtung des Gegenrings (3) wirkt.

8. Gleitringdichtung nach einem der Ansprüche 1 oder 7, **dadurch gekennzeichnet, dass** das Federmittel (4a) eine am Gleitring (1) anliegende Radiallippe (14a) aufweist, welche einen gleich großen oder größeren Innendurchmesser aufweist als der Tragkörper (5').

9. Gleitringdichtung nach einem der Ansprüche 1 oder 7, **dadurch gekennzeichnet, dass** das Federmittel (4c) eine Radiallippe (14c) aufweist, welche unter Winkelbildung vom Gleitring (1) abragt und einen gleich großen oder größeren Innendurchmesser aufweist als der Tragkörper (5').

10. Gleitringdichtung nach einem der Ansprüche 1 oder 7, **dadurch gekennzeichnet, dass** das Federmittel (4) eine an seinem Anschlagbereich (8) anliegende Staublippe (15a) aufweist, welche einen gleich großen oder größeren Innendurchmesser aufweist als der Tragkörper (5').

11. Gleitringdichtung nach einem der Ansprüche 1 oder 7, **dadurch gekennzeichnet, dass** das Federmittel (4) eine an seinem Anbindebereich (9) anliegende Staublippe (15c) aufweist, welche einen gleich großen oder größeren Innendurchmesser aufweist als der Tragkörper (5').

12. Gleitringdichtung nach einem der voranstehenden Ansprüche, **dadurch gekennzeichnet, dass** das Federmittel (4) von einer Wandung (16) zumindest teilweise in axialer und/ oder radialer Richtung umgeben ist.

13. Gleitringdichtung nach Anspruch 12, **dadurch gekennzeichnet, dass** die Wandung (16a) ein Teil eines Tragkörpers (5") ist, in welchem der Gegenring (3) aufgenommen ist.

14. Gleitringdichtung nach einem der Ansprüche 1 oder 7 bis 13, **dadurch gekennzeichnet, dass** zwischen dem Fortsatz (6‴) und dem Gegenring (3) ein Spalt (17) ausgebildet ist.

15. Gleitringdichtung nach einem der Ansprüche 1 oder 7 bis 14, **dadurch gekennzeichnet, dass** sich der Fortsatz (6) in axialer Richtung derart weit erstreckt, dass auch der Gleitring (1) vom Fortsatz (6) unterlaufen ist.

16. Gleitringdichtung nach einem der voranstehenden Ansprüche, **gekennzeichnet durch** eine Gasschmierung.

17. Gleitringdichtung nach einem der voranstehenden Ansprüche, **dadurch gekennzeichnet, dass** die Dichtfläche (1a) des Gleitrings (1) und/ oder die Dichtfläche (3a) des Gegenrings (3) hydrodynamische Strukturen aufweist.

18. Verwendung einer Gleitringdichtung nach einem der voranstehenden Ansprüche als Abdichtung der Kurbelwelle von Verbrennungsmotoren.


**Claims**

1. Slide ring seal, comprising a slide ring (1) which is mounted in an axially movable manner, and a counterpart ring (3), wherein the slide ring (1) and the counterpart ring (3) each have sealing surfaces (1a, 3a) which bear against one another, wherein the sealing surface (1a) of the slide ring (1) is situated opposite the sealing surface (3a) of the counterpart ring (3), and wherein the slide ring (1) is pressed against the counterpart ring (3) by a bellows-like spring means (4), wherein the counterpart ring (3) is accommodated by a support body (5) which has an axial projection (6) for pressing onto a shaft (7), **characterized in that** at least one sealing surface (1a, 3a) has elevations or unevennesses of a size of 0.1 $\mu$m to W mm, wherein W is calculated in accordance with formula

$$W = 0.03 \ Dm/s$$

wherein the mean diameter Dm represents the mean value of outer diameter (Da) and inner diameter (Di) of the circular-ring-shaped sealing surface (1a, 3a) and wherein s represents the thickness of the slide ring (1) or counterpart ring (3), and **in that** a region (6a) of the projection (6) is of frustoconical form in cross section, such that the interior space of the projection (6) for accommodating a shaft (7) runs conically.

2. Slide ring seal according to Claim 1, **characterized in that** at least one sealing surface (1a, 3a) has elevations or unevennesses of a size between 1 $\mu$m and W, preferably of a size between 5 $\mu$m and W, particularly preferably of a size between 20 $\mu$m and W, most preferably of a size between 50 $\mu$m and W.

3. Slide ring seal according to Claim 1 or 2, **characterized in that** the elevations or unevennesses are in the form of undulation troughs and undulation peaks.

4. Slide ring seal according to one of the preceding claims, **characterized in that** the elevations or unevennesses on a sealing surface (1a, 3a) have at least two high points and two low points, preferably three high points and three low points, particularly preferably four high points and four low points.

5. Slide ring seal according to one of the preceding claims, **characterized in that** the elevations or unevennesses on at least one sealing surface (1a, 3a) can, by way of the bellows-like spring means (4), be at least partially deformed such that no impairment of function occurs during the operation of the slide ring seal.

6. Slide ring seal according to one of the preceding claims, **characterized in that** the bellows-like spring means (4) bears by way of an annular abutment region (8) against the slide ring (1) and is fixed by way of an annular connection region (9) to a housing (9), wherein the abutment region (8) and the connection region (9) are connected to one another by at least one elastically deformable hinge region (11).

7. Slide ring seal according to one of the preceding claims, **characterized in that** the quotient of a first circular-ring-shaped area (12), which faces toward the spring means (4), on the slide ring (1) and of a projected, second circular-ring-shaped area (13), which extends between an abutment region (8) of the spring means (4) against the slide ring (1) and a connection region (9) of the spring means (4) to a housing (10), is selected such that a second force acting on the projected, second circular-ring-shaped area (13) axially in the direction of the slide ring (1) is between 1% and 100,000%, preferably between 10% and 1000%, particularly preferably between 10% and 100%, of a first force which acts on the first circular-ring-shaped area (12) axially in the direction of the counterpart ring (3).

8. Slide ring seal according to one of Claims 1 or 7, **characterized in that** the spring means (4a) has a radial lip (14a) which bears against the slide ring (1) and which has the same inner diameter as or a larger inner diameter than the support body (5').

9. Slide ring seal according to one of Claims 1 or 7, **characterized in that** the spring means (4c) has a radial lip (14c) which projects at an angle from the slide ring (1) and which has the same inner diameter as or a larger inner diameter than the support body (5').

10. Slide ring seal according to one of Claims 1 or 7, **characterized in that** the spring means (4) has a dust lip (15a) which bears against the abutment region (8) thereof and which has the same inner diameter as or a larger inner diameter than the support body (5').

11. Slide ring seal according to one of Claims 1 or 7, **characterized in that** the spring means (4) has a dust lip (15c) which bears against the connection region (9) thereof and which has the same inner diameter as or a larger inner diameter than the support body (5').

12. Slide ring seal according to one of the preceding claims, **characterized in that** the spring means (4) is surrounded at least partially in an axial and/or radial direction by a wall (16).

13. Slide ring seal according to Claim 12, **characterized in that** the wall (16a) is a part of a support body (5") in which the counterpart ring (3) is accommodated.

14. Slide ring seal according to one of Claims 1 or 7 to 13, **characterized in that** a gap (17) is formed between the projection (6‴) and the counterpart ring (3).

15. Slide ring seal according to one of Claims 1 or 7 to 14, **characterized in that** the projection (6) extends in an axial direction to such an extent that the projection (6) also runs under the slide ring (1) .

16. Slide ring seal according to one of the preceding claims, **characterized by** a gas-type lubrication arrangement.

17. Slide ring seal according to one of the preceding claims, **characterized in that** the sealing surface (1a) of the slide ring (1) and/or the sealing surface (3a) of the counterpart ring (3) have/has hydrodynamic structures.

18. Use of a slide ring seal according to one of the preceding claims as a seal of the crankshaft of internal combustion engines.

**Revendications**

1. Joint d'étanchéité à bague de glissement comprenant une bague de glissement (1) qui est supporté de manière déplaçable axialement, et une bague conjuguée (3), la bague de glissement (1) et la bague conjuguée (3) présentant chacune des surfaces d'étanchéité en appui l'une contre l'autre (1a, 3a), la surface d'étanchéité (1a) de la bague de glissement (1) étant en regard de la surface d'étanchéité (3a) de la bague conjuguée (3) et la bague de glissement (1) étant pressée contre la bague conjuguée (3) par un moyen de ressort de type soufflet (4), la bague conjuguée (3) étant reçue par un corps de support (5) qui présente une saillie axiale (6) destinée à presser contre un arbre (7), **caractérisé en ce qu'**au moins une surface d'étanchéité (1a, 3a) présente des rehaussements ou des inégalités d'un ordre de grandeur de 0,1 $\mu$m à W mm, W se calculant d'après la formule

$$W = 0{,}03 \ Dm/s,$$

le diamètre moyen Dm étant la valeur moyenne du diamètre extérieur (Da) et du diamètre intérieur (Di) de la surface d'étanchéité de forme annulaire circulaire (1a, 3a) et s étant l'épaisseur de la bague de glissement (1) ou de la bague conjuguée (3), et qu'une région (6a) de la saillie (6) a une section transversale de forme tronconique de telle sorte que l'espace interne de la saillie (6) pour recevoir un arbre (7) s'étende sous forme conique.

2. Joint d'étanchéité à bague de glissement selon la revendication 1, **caractérisé en ce qu'**au moins une surface d'étanchéité (1a, 3a) présente des rehaussements ou des inégalités d'un ordre de grandeur entre 1 $\mu$m et W, de préférence d'un ordre de grandeur entre 5 $\mu$m et W, en particulier préférablement d'un ordre de grandeur entre 20 $\mu$m et W, au maximum de préférence d'un ordre de grandeur entre 50 $\mu$m et W.

3. Joint d'étanchéité à bague de glissement selon la revendication 1 ou 2, **caractérisé en ce que** les rehaussements ou les inégalités sont configurés sous forme de creux d'ondulations et de pics d'ondulations.

4. Joint d'étanchéité à bague de glissement selon l'une quelconque des revendications précédentes, **caractérisé en ce que** les rehaussements ou les inégalités sur une surface d'étanchéité (1a, 3a) présentent au moins deux points supérieurs et deux points inférieurs, de préférence trois points supérieurs et trois points inférieurs, en particulier préférablement quatre points supérieurs et quatre points inférieurs.

5. Joint d'étanchéité à bague de glissement selon l'une quelconque des revendications précédentes, **caractérisé en ce que** les rehaussements ou les inégalités sur au moins une surface d'étanchéité (1a, 3a) peuvent être déformés au moins en partie par le moyen de ressort de type soufflet (4) de telle sorte que pendant le fonctionnement du joint d'étanchéité à bague de glissement, aucun effet adverse sur le fonctionnement ne se produise.

6. Joint d'étanchéité à bague de glissement selon l'une quelconque des revendications précédentes, **caractérisé en ce que** le moyen de ressort de type soufflet (4) s'applique avec une région de butée de forme annulaire (8) contre la bague de glissement (1) et est fixé avec une région de liaison de forme annulaire (9) contre un boîtier (9), la région de butée (8) et la région de liaison (9) étant raccordées l'une à l'autre par au moins une région de charnière élastiquement déformable (11).

7. Joint d'étanchéité à bague de glissement selon l'une quelconque des revendications précédente, **caractérisé en ce que** le quotient d'une première surface annulaire circulaire (12) au niveau de la bague de glissement (1), qui est tournée vers le moyen de ressort (4), et d'une deuxième surface annulaire circulaire projetée (13), qui s'étend entre une région de butée (8) du moyen de ressort (4) au niveau de la bague de glissement (1) et une région de liaison (9) du moyen de ressort (4) au niveau d'un boîtier (10), est choisi de telle sorte qu'une deuxième force agissant axialement dans la direction de la bague de glissement (1) sur la deuxième surface annulaire circulaire projetée (13) aille entre 1 % et 100000 %, de préférence entre 10 % et 1000 %, en particulier préférablement entre 10 % et 100 %, d'une première force qui agit sur la première surface annulaire circulaire (12) axialement dans la direction de la bague conjuguée (3).

8. Joint d'étanchéité à bague de glissement selon l'une quelconque des revendications 1 ou 7, **caractérisé en ce que** le moyen de ressort (4a) présente une lèvre radiale (14a) s'appliquant contre la bague de glissement (1), laquelle présente un diamètre intérieur supérieur ou égal à celui du corps de support (5').

9. Joint d'étanchéité à bague de glissement selon l'une quelconque des revendications 1 ou 7, **caractérisé en ce que** le moyen de ressort (4c) présente une lèvre radiale (14c) qui dépasse de la bague de glissement (1) en formant un angle et qui présente un diamètre intérieur supérieur ou égal à celui du corps de support (5').

10. Joint d'étanchéité à bague de glissement selon l'une quelconque des revendications 1 ou 7, **caractérisé en ce que** le moyen de ressort (4) présente une lèvre antipoussière (15a) s'appliquant contre sa région de butée (8), laquelle présente un diamètre intérieur supérieur ou égal à celui du corps de support (5').

11. Joint d'étanchéité à bague de glissement selon l'une quelconque des revendications 1 ou 7, **caractérisé en ce que** le moyen de ressort (4) présente une lèvre antipoussière (15c) s'appliquant contre sa région de liaison (9), laquelle présente un diamètre intérieur supérieur ou égal à celui du corps de support (5').

12. Joint d'étanchéité à bague de glissement selon l'une quelconque des revendications précédentes, **caractérisé en ce que** le moyen de ressort (4) est entouré au moins en partie dans la direction axiale et/ou radiale par une paroi (16).

13. Joint d'étanchéité à bague de glissement selon la revendication 12, **caractérisé en ce que** la paroi (16a) est une partie d'un corps de support (5"), dans lequel est reçue la bague conjuguée (3).

14. Joint d'étanchéité à bague de glissement selon l'une quelconque des revendications 1 ou 7 à 13, **caractérisé en ce qu'**entre la saillie (6‴) et la bague conjuguée (3) est réalisée une fente (17).

15. Joint d'étanchéité à bague de glissement selon l'une quelconque des revendications 1 ou 7 à 14, **caractérisé en ce que** la saillie (6) s'étend dans la direction axiale sur une longueur telle que la saillie (6) s'étend également en dessous de la bague de glissement (1).

16. Joint d'étanchéité à bague de glissement selon l'une quelconque des revendications précédentes, **caractérisé par** une lubrification à gaz.

17. Joint d'étanchéité à bague de glissement selon l'une quelconque des revendications précédentes, **caractérisé en ce que** la surface d'étanchéité (1a) de la bague de glissement (1) et/ou la surface d'étanchéité (3a) de la bague conjuguée (3) présentent des structures hydrodynamiques.

18. Utilisation d'un joint d'étanchéité à bague de glissement selon l'une quelconque des revendications précédentes, en tant que garniture d'étanchéité du vilebrequin de moteurs à combustion interne.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

# Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011114349 A1
- EP 1054196 A2